# EUROPÄISCHE PATENTSCHRIFT

(11) **EP 0 449 838 B1**
(45) Veröffentlichungstag und Bekanntmachung des Hinweises auf die Patenterteilung: **29.12.1993**
(21) Anmeldenummer: 89911011.8
(22) Anmeldetag: 05.10.1989
(51) Int. Cl.: G02B 6/36

(54) **STECKERSTIFT FÜR EINEN LICHTWELLENLEITER-STECKER**
CONNECTOR PIN FOR AN OPTICAL WAVEGUIDE CONNECTOR
POINTE DE CONTACT POUR CONNECTEUR DE GUIDE D'ONDES LUMINEUSES

(30) Priorität: 22.12.1988 DE 3843733
(43) Veröffentlichungstag der Anmeldung: 09.10.1991
(73) Patentinhaber: SIEMENS AKTIENGESELLSCHAFT, 80333 München (DE)
(72) Erfinder: LÜTTGERT, Karl-Ernst, D-1000 Berlin 41 (DE); SCHULZ, Klaus, D-1000 Berlin 49 (DE)
(86) Internationale Anmeldenummer: DE8900642
(87) Internationale Veröffentlichungsnummer: WO9007136

(56) Entgegenhaltungen:
- EP-A- 0 131 742
- EP-A- 0 223 609
- DE-A- 3 541 245
- US-A- 4 634 214
- US-A- 4 867 288

## Beschreibung

Die Erfindung bezieht sich auf einen Steckerstift für einen LWL-Stecker enthaltend ein Ende eines Lichtwellenleiters, wobei der Steckerstift aus mindestens einem Keramikstift mit einer zentralen Bohrung zur Aufnahme des Lichtwellenleiters, einer auf den Keramikstift aufgepreßten Hülse mit Flansch, einer mit einem Ende auf dem Flansch aufliegenden Druckfeder und aus einem Gegenlager besteht, das ebenfalls eine zentrale Bohrung zur Aufnahme eines zylindrischen Lichtwellenleiterabschnitts mit dem ihn umgebenden Coating und der den Lichtwellenleiter und das Coating umgebenden Aderhülle enthält.

Es sind Lichtwellenleiter-Stecker auf dem Markt, bei denen die Steckerstifte gegenüber dem Steckergehäuse beweglich geführt angeordnet sind. Diese Beweglichkeit ist während des Steckvorganges zur Begrenzung der auf die Steckerstifte ausgeübten Kräfte erforderlich. Diese Beweglichkeit der Steckerstifte erzeugt automatisch eine Bewegung der Lichtwellenleiter, bei denen kleinste erlaubte Biegeradien vorgeben sind. Beim Einführen der LWL in die Steckerstifte müssen Knickungen der LWL auf jeden Fall vermieden werden. Die bekannten Steckerstifte kennen nur zwei Bohrdurchmesser, wobei die Bohrung mit dem kleineren Durchmesser in Keramikstift selbst an den reinen Lichtwellenleiter angepaßt ist und eine Bohrung mit dem größeren Durchmesser im Gegenlager, die an den Durchmesser der Aderhülle des Lichtwellenleiters angepaßt ist. Weil bei den Lichtwellenleitern auf einem Teil ihrer Länge stets ein Stück vorhanden ist, bei dem nur noch das Coating, nicht aber die ganze Aderhülle vorhanden ist, ist auf diesem Abschnitt die Gefahr der Knickung des Lichtwellenleiters bei seinem Einfädeln in den Steckerstift groß.

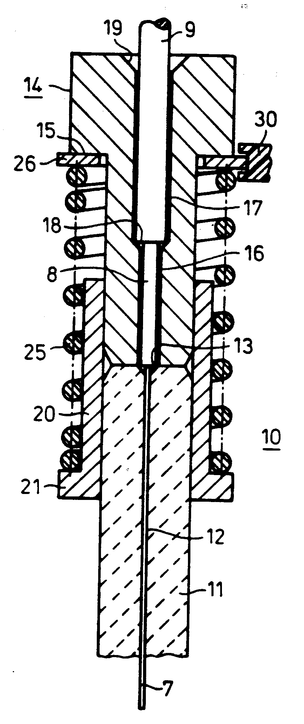

Aus der US-PS 4,687,288 ist ein Steckerstift der eingangs genannten Art bekannt (vgl. dort insbesondere Fig. 3). Bei dem bekannten Steckerstift sind jedoch der Keramikstift und das Gegenlager nicht zueinander festgelegt. Im Übergangsbereich zwischen dem Keramikstift und dem Gegenlager ist keine Stützung des Lichtwellenleiters vorgesehen. Es besteht daher dort die Gefahr des Ausknickens des Lichtwellenleiters.

Die Erfindung zielt darauf ab, diese zuvor erwähnte Knickgefahr auszuschalten. Zur Lösung dieser Aufgabe wird gemäß der Erfindung vorgesehen, daß die Hülse auf den Keramikstift aufgepreßt ist, daß das Gegenlager in die Hülse eingepreßt ist, daß an dem dem Flansch abgewandten Ende der Druckfeder eine Druckscheibe vorgesehen ist und daß die Bohrung im Gegenlager zwei Abschnitte mit unterschiedlichem Durchmesser aufweist, wobei der Durchmesser des ersten Bohrabschnittes, der auf den Keramikstift mündet, dem Durchmesser des mit Coating versehenen Lichtwellenleiters entspricht, während der zweite Bohrabschnitt einen der Aderhülle des Lichtwellenleiters entsprechenden Durchmesser aufweist.

Auf diese Weise wird durch die beiden Bohrabschnitte mit unterschiedlichen Durchmessern den Lichtwellenleitern keine Chance mehr gegeben, beim Einfädelvorgang abzuknicken, so daß das Einfädeln problemlos durchgeführt werden kann. Außerdem wird mit dieser Maßnahme erreicht, daß die Aderhülle am Ende des Bohrabschnittes mit dem größeren Durchmesser aufsitzt, so daß ein Aufsitzen des Coatings im anderen Bohrabschnitt vermieden Wird. Das ist wichtig, weil sonst Querkräfte auf den Lichtwellenleiter wirken könnten, die einen Bruch zur Folge haben.

Die Erfindung wird anhand des in der Zeichnung dargestellten und nachfolgend näher beschriebenen Ausführungsbeipiels im einzelnen erläutert.

In der Zeichnung zeigt die einzige Figur einen Längsschnitt durch einen Steckerstift.

Der Steckerstift 10 besteht aus einem Keramikstift 11 mit einer zentralen Bohrung 12, die im Durchmesser dem eines reinen Lichtwellenleiters 7 entspricht, also ohne Coating und Aderhülle. Auf seiner ins Innere des Steckerstiftes weisenden Oberseite ist der Keramikstift mit einem Einfädeltrichter 13 versehen. Auf den Keramikstift ist eine Hülse 20 aus Metall aufgepreßt, die mit einem Flansch 21 versehen ist. Die Hülse 20 dient als Führung und der Flansch 21 der Hülse als Auflage für eine Druckfeder 25. In die Hülse ist ein Gegenlager 14 aus Metall angepreßt, das mit einer Schulter 15 ein Gegenlager für die Druckfeder 25 bildet. Zwischen der Schulter 15 und der Druckfeder 25 befindet sich eine Druckscheibe 26, die fest im Steckergehäuse 30 verankert ist.

Im Gegenlager 14 sind zwei Bohrabschnitte 16 und 17 vorgesehen, wobei der erste Bohrabschnitt 16, der auf dem Keramikstift 11 mündet, eine Bohrung aufweist, deren Durchmesser dem eines Lichtwellenleiters mit Coating 8 entspricht, während der zweite Bohrabschnitt 17 im Durchmesser einem Lichtwellenleiter mit Aderhülle 9 angepaßt ist. Am Übergang vom ersten zum zweiten Bohrabschnitt ist ein unterer Einfädeltrichter 18 und an der Oberseite des zweiten Bohrabschnitts 17 ein oberer Einfädeltrichter 19 vorgesehen.

Beim Fertigen dieser Vorrichtung wird so vorgegangen, daß auf den in eine Führung gestellten Keramikstift 11 die Metallhülse 20 aufgepreßt wird. Dann wird ein Kleber in den Einfädeltrichter 13 exakt dosiert, danach die Druckfeder 25 mit der Druckscheibe 26 über die Hülse 20 geführt und danach das Gegenlager 14 in die Hülse 20 eingepreßt. Dann wird Kleber in den oberen Einfädeltrichter 19 dosiert, wonach der Lichtwellenleiter 7 eingeführt wird, der im Bereich des ersten Bohrabschnittes 16 mit Coating 8 und im zweiten Bohrabschnitt 17 noch seine Aderhülle 9 besitzt. Durch die enge Führung in den jeweiligen Abschnitten ist der Lichtwellenleiter niemals der Gefahr abzuknicken ausgesetzt.

## Patentansprüche

1. Steckerstift für einen LWL-Stecker enthaltend ein Ende eines Lichtwellenleiters, wobei der Steckerstift aus mindestens einem Keramikstift (11) mit einer zentralen Bohrung (12) zur Aufnahme des Lichtwellenleiters (7), einer den Keramikstift umgebenden Hülse (20) mit Flansch (21), einer mit einem Ende auf dem Flansch aufliegenden Druckfeder (25) und aus einem Gegenlager (14) besteht das ebenfalls eine zentrale Bohrung zur Aufnahme eines zylindrischen Lichtwellenleiterabschnitts mit dem ihn umgebenden Coating und der den Lichtwellenleiter und das Coating umgebenden Aderhülle enthält, **dadurch gekennzeichnet,** daß die Hülse (20) auf den Keramikstift (11) aufgepreßt ist, daß das Gegenlager (15) in die Hülse eingepreßt ist, daß an dem dem Flansch abgewandten Ende der Druckfeder (25) eine Drucksscheibe (26) vorgesehen ist, und daß die Bohrung im Gegenlager (15) zwei Abschnitte (16, 17) mit unterschiedlichem Durchmesser aufweist, wobei der Durchmesser des ersten Bohrabschnittes (16), der auf dem Keramikstift (11) mündet, dem Durchmesser das mit Coating versehenen Lichtwellenleiters (8) entspricht, während der zweite Bohrabschnitt (17) einen der Aderhülle (9) des Lichtwellenleiters entsprechenden Durchmesser aufweist.

## Claims

1. Connector pin for an optical waveguide connector containing one end of an optical waveguide, the connector pin comprising at least one ceramics pin (11) with a central bore (12) for receiving the optical waveguide (7), a sleeve (20) with flange (21) enclosing the ceramics pin, a compression spring (25) supported with one end on the flange, and an abutment (14), which also contains a central bore for receiving a cylindrical optical waveguide section with the coating enclosing it and the core sheath enclosing the optical waveguide and the coating, characterised in that the sleeve (20) is pressed onto the ceramics pin (11), in that the abutment (15) is pressed into the sleeve, in that a compression disc (26) is provided on the end of the compression spring (25) remote from the flange, and in that the bore in the abutment (15) has two sections (16, 17) with different diameter, the diameter of the first bore section (16), which opens on the ceramics pin (11), corresponding to the diameter of the optical waveguide (8) provided with coating, whilst the second bore section (17) has a diameter corresponding to the core sheath (9) of the optical waveguide.

## Revendications

1. Broche pour un connecteur de guide d'ondes lumineuses contenant une extrémité d'un guide d'ondes lumineuses, la broche du connecteur étant constituée par au moins une broche céramique (11) comportant un perçage central (12) servant à loger le guide d'ondes lumineuses (7), une douille (20) entourant la broche céramique et comportant une bride (21), un ressort de pression (25) qui s'applique par une extrémité sur la bride, et une butée (14), qui comporte également un perçage central servant à loger une section cylindrique du guide d'ondes lumineuses pourvue d'un revêtement l'entourant, et la douille de conducteur entourant le guide d'ondes lumineuses et le revêtement, caractérisé par le fait que la douille (20) est emmanchée à force sur la broche céramique (11), que la butée (15) est insérée à force dans la douille, qu'un disque de pression (20) est prévu sur l'extrémité du ressort de pression (25), tournée à l'opposé de la bride, et que le perçage ménagé dans la butée (15) comporte deux sections (16,17) possédant des diamètres différents, le diamètre de la première section (16) du perçage, qui débouche dans la broche céramique (11), correspondant au diamètre du guide d'ondes lumineuses (8) qui est pourvu d'un revêtement, tandis que la seconde section (17) du perçage possède un diamètre qui correspond à la douille (9) du conducteur du guide d'ondes lumineuses.
